# EUROPEAN PATENT APPLICATION

(11) **EP 4 428 994 A2**
(43) Date of publication of application: **11.09.2024**
(21) Application number: 23218259.2
(22) Date of filing: 19.12.2023
(51) Int. Cl.: H01M 50/103, H01M 50/148, H01M 50/15, H01M 50/169

(54) **POWER STORAGE DEVICE AND METHOD FOR PRODUCING THE POWER STORAGE DEVICE**

(30) Priority: 06.03.2023 JP 2023033705
(71) Applicant: Prime Planet Energy & Solutions, Inc., Chuo-ku Tokyo 103-0022 (JP)
(72) Inventor: UCHIDA, Yozo, Tokyo, 103-0022 (JP)
(74) Representative: Kuhnen & Wacker Patent- und Rechtsanwaltsbüro PartG mbB

(57) **Abstract**

A power storage device (1) is provided with a case (10) and an electrode body (50) housed in the case (10). The case (10) includes a bottomed prismatic shaped case body (21) with an opening (21c), and a plate-shaped lid member (31) closing the opening (21c). The case body (21) includes an opening peripheral portion (21f) that is bent to the inside (GH1) of the opening (21c) over the entire circumference. The lid member (31) includes a lid peripheral portion (31f) that is bent toward an inner surface (31n) over the entire circumference. While the lid peripheral portion (31f) is stacked, over a ring-band shaped range (SR), on the opening peripheral portion (21f) on the outside (IH1) in the thickness direction, the lid peripheral portion(31f) and the opening peripheral portion (21f) are hermetically joined to each other.

## Description

### BACKGROUND

### Technical field

The invention relates to a power storage device in which an electrode body is housed in a case, and a method for producing the power storage device.

### Related Art

As a power storage device, a rectangular battery in which an electrode body is housed in a case shaped like a rectangular box has been known. Conventionally, this case is composed of: a case body having a bottomed rectangular prismatic shape with a rectangular opening; and a rectangular lid member welded to the case body to close the opening. Specifically, for example, the case body is provided with a shoulder portion inside an opening peripheral portion, on which a lid peripheral portion of the lid member is placed to close the opening of the case body. Then, a laser beam is applied to the boundary between the lid peripheral portion of the lid member and the opening peripheral portion of the case body over the entire circumference to weld the lid peripheral portion and the opening peripheral portion together.

In contrast, Patent document 1 (see FIGs. 2, 3, and 5) discloses the configuration that a lid peripheral portion of a lid member is bent in an L-shape over its entire circumference, and this bent lid peripheral portion is placed outside the lateral side of an opening peripheral portion of a case body. Then, a laser beam is applied from the lateral side to the lid peripheral portion to weld the lid peripheral portion to the opening peripheral portion of the case body.

### Citation List

### Patent Documents

Patent Document 1: Japanese unexamined patent application publication No. 2012-038603 (JP 2012-038603A)

### SUMMARY

### Technical Problems

However, in the former conventional art, since the lid peripheral portion of the lid member and the opening peripheral portion of the case body are welded together by irradiation of the laser beam to the boundary therebetween, welding defects are apt to occur at the boundary. Specifically, gaps may be formed between the lid peripheral portion and the opening peripheral portion after welding. Also, when the lid peripheral portion and the opening peripheral portion are joined together by adhesion, gaps are likely to occur therebetween after adhering.

On the other hand, in the latter conventional art, gaps occur between the lid peripheral portion of the lid member bent in the L-shape and the opening peripheral portion of the case body due to dimensional tolerance. It is thus difficult to appropriately weld the lid peripheral portion to the opening peripheral portion. Also, when the lid peripheral portion and the opening peripheral portion are joined together by adhesion, it is also difficult to join them appropriately.

The present invention has been made to address the above problems and has a purpose to provide a power storage device with high reliability of sealing between a lid member and a case body of a case, and a method for producing the power storage device.

### Means of Solving the Problems

(1) To achieve the above-mentioned purpose, one aspect of the present invention provides a power storage device comprising: a case; and an electrode body housed in the case, the case including: a case body having a bottomed prismatic shape with an opening, in which the electrode body is housed; and a lid member having a plate shape and closing the opening, the lid member including: an inner surface facing to the case body, and a lid peripheral portion welded over an entire circumference to an opening peripheral portion of the case body, characterized in that the opening peripheral portion of the case body is bent over an entire circumference to inside of the opening, the lid peripheral portion of the lid member is bent over the entire circumference toward the inner surface, and the lid peripheral portion and the opening peripheral portion are hermetically joined to each other while the lid peripheral portion is stacked on the opening peripheral portion on outside in a thickness direction over a ring-band shaped range extending over the entire circumference and in expanding directions of the lid member.

In the above-described power storage device, the lid peripheral portion and the opening peripheral portion are hermetically joined together while the bent lid peripheral portion of the lid member is stacked on the bent opening peripheral portion of the case body on the outside in the thickness direction of the opening peripheral portion over the ring-band shaped range. Thus, the lid peripheral portion and the opening peripheral portion reliably joined to each other, resulting in a power storage device with high reliability of sealing between the lid member and the case body.

The power storage device may include, for example, a secondary battery, such as a lithium-ion secondary battery, a sodium-ion secondary battery, and a calcium-ion secondary battery, and a capacitor, such as a lithium-ion capacitor.

The joining way to join the lid peripheral portion of the lid member and the opening peripheral portion of the case body may include for example welding and adhering. The adhering way may include for example adhering using an adhesive that hardens by heat or ultraviolet light and joining using thermoplastic resin.

(2) In the power storage device described in (1), further, the lid peripheral portion and the opening peripheral portion may be hermetically welded together by a ring-shaped welded portion having a ring shape extending continuously over an entire circumference.

In the above-described power storage device, the lid peripheral portion and the opening peripheral portion are hermetically welded together at the ring-shaped welded portion, so that the sealing reliability between the lid member and the case body can be enhanced particularly.

(3) In the power storage device described in (2), further, the lid peripheral portion and the opening peripheral portion may be hermetically welded together by a plurality of the ring-shaped welded portions.

In the above-described power storage device, the lid peripheral portion and the opening peripheral portion are hermetically welded together by the plurality of ring-shaped welded portions, so that the sealing reliability between the lid member and the case body can be further enhanced.

(4) Furthermore, the power storage device described in one of (1) to (3) may be configured such that the electrode body housed in the case body has a dimension in expanding directions such that, as viewed in a depth direction of the case body, a ring-shaped electrode-body outer edge portion of the electrode body, located on outside of the expanding directions perpendicular to the depth direction, overlaps the opening peripheral portion of the case body over the entire circumference.

The above-described power storage device is provided with the electrode body that is so large in the expanding directions as that it cannot be inserted through the opening of the case body. This configuration can increase the device capacity per area in the expanding directions of the power storage device.

(5) Furthermore, the power storage device described in one of (1) to (4) may be configured such that the case has a rectangular parallelepiped box shape and includes a rectangular first main wall portion, a rectangular second main wall portion opposite the first main wall portion, and four rectangular side wall portions connecting the first main wall portion and the second main wall portion and extending in a case thickness direction, and the case body provides the second main wall portion and the four side wall portions, and the lid member provides the first main wall portion.

In the above-described power storage device, the case is shaped like a rectangular box. This case consists of the case body, which forms the second main wall portion and the four side wall portions, joined with the lid member, which forms the first main wall portion. Thus, the power storage device can be easily manufactured as an inexpensive power storage device, as described below.

(6) Another aspect of the invention provides a method for producing a power storage device, wherein the power storage device comprises: a case; and an electrode body housed in the case, the case including: a case body having a bottomed prismatic shape with an opening, in which the electrode body is housed; and a lid member having a plate shape and closing the opening, the lid member including: an inner surface facing to the case body, and a lid peripheral portion welded over an entire circumference to an opening peripheral portion of the case body, the opening peripheral portion of the case body is bent over an entire circumference to inside of the opening, the lid peripheral portion of the lid member is bent over the entire circumference toward the inner surface, the lid peripheral portion and the opening peripheral portion are hermetically joined together while the lid peripheral portion overlaps the opening peripheral portion on the outside in a thickness direction thereof over the entire circumference, the lid peripheral portion and the opening peripheral portion are hermetically joined to each other while the lid peripheral portion is stacked on the opening peripheral portion on outside in a thickness direction over a ring-band shaped range extending over the entire circumference and in expanding directions of the lid member, characterized in that the method comprises: housing the electrode body into the case body; and joining the lid peripheral portion and the opening peripheral portion hermetically to each other over an entire circumference to form the case while the lid member is overlaid on the case body and the electrode body housed in the case body, and the bent lid peripheral portion is overlaid on and pressed against the bent opening peripheral portion over the entire circumference.

In the foregoing method, as described above, the joining process is performed by hermetically joining the lid peripheral portion and the opening peripheral portion over the entire circumference while pressing the lid peripheral portion against the opening peripheral portion. Thus, the lid peripheral portion and the opening peripheral portion can be reliably hermetically joined to each other. This method can therefore produce a power storage device with high reliability of sealing between the lid member and the case body.

Before the lid peripheral portion is pressed against the opening peripheral portion in the joining process, the curvature radius (Rf) of the curve of the lid peripheral portion and the curvature radius (Ro) of the curve of the opening peripheral portion may be approximately equal (Rf ≈ Ro). In the case where the curvature radius (Rf) and the curvature radius (Ro) are nearly equal (Rf ≈ Ro), when the lid peripheral portion is pressed against the opening peripheral portion, the lid peripheral portion comes to a stacked state on the opening peripheral portion over the ring-band shaped range and hence they can be joined together appropriately.

When the lid member is made of a material that can change the bending state, i.e., the curvature, of the lid peripheral portion, the curvature radius (Rf) of the lid peripheral portion may be smaller than the curvature radius (Ro) of the opening peripheral portion, which is expressed by a relationship of Rf < Ro. In this case, the lid peripheral portion is pressed against the opening peripheral portion to increase the curvature radius (Rf) of the lid peripheral portion so as to become nearly equal to the curvature radius (Ro) of the opening peripheral portion (Rf ≈ Ro). This widened lid peripheral portion is stacked on the opening peripheral portion over the ring-band shaped range, and thus they can be joined together appropriately.

(7) Furthermore, the method described in (6) may be configured such that the lid peripheral portion and the opening peripheral portion are hermetically welded together by a ring-shaped welded portion formed in a ring shape extending continuously over an entire circumference, joining the lid peripheral portion and the opening peripheral portion includes welding the lid peripheral portion to the opening peripheral portion by the ring-shaped welded portion by irradiating the lid peripheral portion with a laser beam from an opposite-depth direction opposite a depth direction of the case body.

In the above-described method, the laser beam is applied to the lid peripheral portion while the lid peripheral portion is pressed against the opening peripheral portion, thus welding the lid peripheral portion to the opening peripheral portion by the ring-shaped welded portion. This method can enhance particularly the reliability of sealing between the lid member and the case body.

In the art disclosed in Patent document 1, the laser beam is applied to the lid peripheral portion from the outer lateral side of the case body. This method needs to weld the lid peripheral portion over the entire circumference by rotating the case one turn or alternatively to weld four sides of the lid peripheral portion one by one (see Patent document 1 , FIG. 5 and others), resulting in low productivity. In contrast, the above-described method, the laser beam is applied to the lid peripheral portion of the lid member from the opposite-depth direction as mentioned above, so that the lid peripheral portion can be easily welded to the opening peripheral portion over the entire circumference.

If welding process is performed several times, for example, if the welding process is conducted in twice, i.e., by temporary welding and main welding, or is conducted doubly, all the welding processes may be performed while the lid peripheral portion is pressed against the opening peripheral portion or may be performed so that the first welding process is conducted while the lid peripheral portion is pressed against the opening peripheral portion and subsequent welding process or processes are conducted without pressing the lid peripheral portion against the opening peripheral portion with an external force.

(8) In the method described in (7), further, the lid peripheral portion and the opening peripheral portion may be hermetically welded together by a plurality of the ring-shaped welded portions, and joining the lid peripheral portion and the opening peripheral portion includes forming the plurality of ring-shaped welded portions.

In the foregoing method, the plurality of ring-shaped welded portions are formed to weld the lid peripheral portion and the opening peripheral portion, which can further enhance the reliability of sealing between the lid member and the case body.

(9) The method described in one of (6) to (8) may also be configured such that the electrode body housed in the case body has a dimension in expanding directions such that, as viewed in a depth direction of the case body, a ring-shaped electrode-body outer edge portion of the electrode body, located on outside in the expanding directions perpendicular to the depth direction, overlaps the opening peripheral portion of the case body over the entire circumference, and housing the electrode body into the case body is performed by inserting the electrode body into an unbent case body that has an unbent opening peripheral portion defining a wide-area opening having a wider open area than the opening of the case body, through the wide-area opening, and after housing the electrode body into the case body but before joining the lid peripheral portion and the opening peripheral portion, the method further comprises bending the unbent opening peripheral portion of the unbent case body housed in the electrode body toward inside of the wide-area opening to form the opening peripheral portion.

In the foregoing method, the electrode body is inserted in the unbent case body, which includes an unbent opening peripheral portion before subjected to a bending work and thus has the wide-area opening having a wide opening area, through the wide-area opening, and then the bending process is performed to form the case body with the bent opening peripheral portion, providing an opening having a narrow opening area. This method can therefore easily produce a power storage device containing an electrode body that is so large in the expanding directions as that it cannot be inserted into the case through the narrow opening.

The shape or form of the unbent opening peripheral portion of the unbent case body may include the shape with no curve to the inside of the wide-area opening and further, for example, the shape with a slight curve to the inside of the wide-area opening but it is not bent so largely as the opening peripheral portion after the bending process.

(10) Furthermore, the method described in one of (6) to (9) may be configured such that the case has a rectangular parallelepiped box shape and includes a rectangular first main wall portion, a rectangular second main wall portion opposite the first main wall portion, and four rectangular side wall portions connecting the first main wall portion and the second main wall portion and extending in a case thickness direction, and the case body provides the second main wall portion and the four side wall portions, and the lid member provides the first main wall portion, the housing process is performed by inserting the electrode body into the case body that provides the second main wall portion and the four side wall portions through the opening.

In the above-described power storage device, the case is shaped like a rectangular box. In the housing process, the electrode body is inserted into the bottomed rectangular prismatic case body, which forms the second main wall portion and four side wall portions, through the opening. Thus, the case body has a larger opening as compared with the configuration that the electrode body is inserted into a bottomed rectangular prismatic case body, which forms the first main wall portion, second main wall portion, and three side wall portions. Consequently, this method can easily insert the electrode body into the case body and thus easily produce the power storage device.

### BRIEF DESCRIPTION OF THE DRAWINGS

FIG. 1 is a perspective view of a battery in an embodiment;
FIG. 2 is an exploded perspective view of the battery in the embodiment;
FIG. 3 is a cross-sectional view of the battery taken along a A-A line in FIG. 1 in a case width direction and a case thickness direction in the embodiment;
FIG. 4 is a partial enlarged cross-sectional view of the battery, near a ring-shaped welded portion, taken in the case width direction and the case thickness direction, in the embodiment;
FIG. 5 is an explanatory view showing an electrode body housed in a case body of the battery, as viewed in a depth direction of the case body, in the embodiment;
FIG. 6 is a perspective view of the electrode body in the embodiment;
FIG. 7 is a flowchart showing a method of producing the battery in the embodiment;
FIG. 8 is an explanatory view showing the method for producing the battery in the embodiment, illustrating that the electrode body is housed in an unbent case body;
FIG. 9 is an explanatory view showing the method for producing the battery in the embodiment, illustrating that an unbent opening peripheral portion of an unbent case body is bent to form an opening peripheral portion; and
FIG. 10 is an explanatory view showing the method for producing the battery in the embodiment, illustrating that a lid peripheral portion of a lid member and an opening peripheral portion of the case body to be welded together by laser.

### DETAILED DESCRIPTION OF THE EXEMPLARY EMBODIMENTS

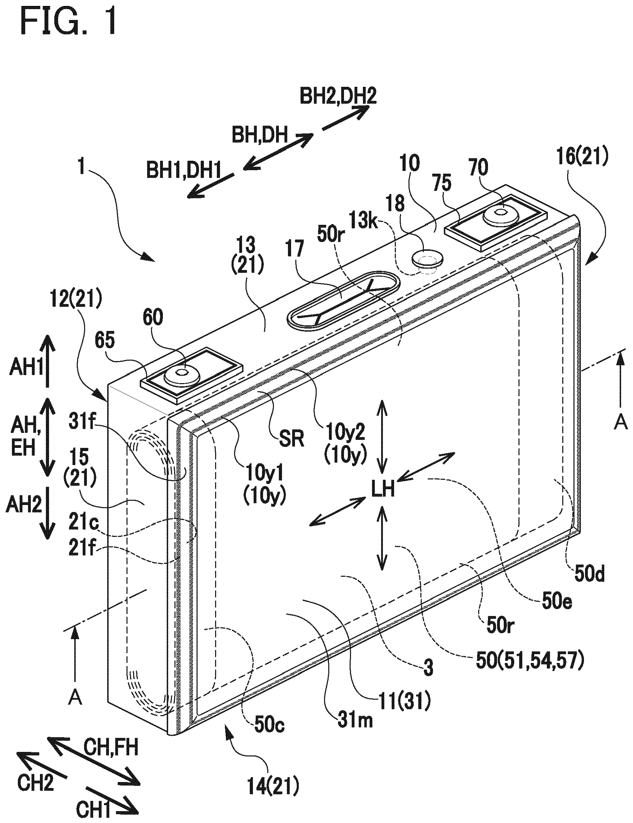

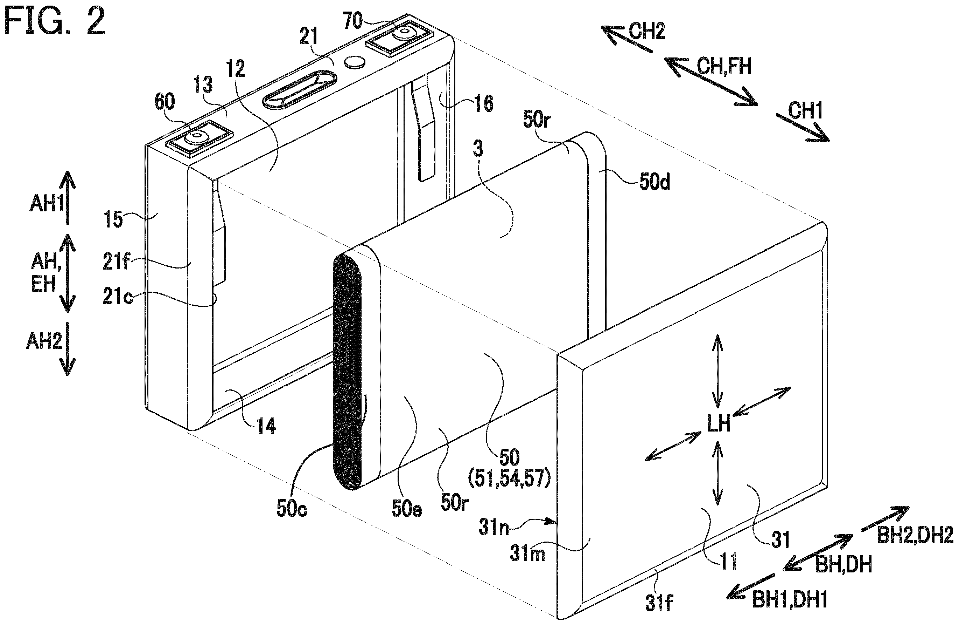

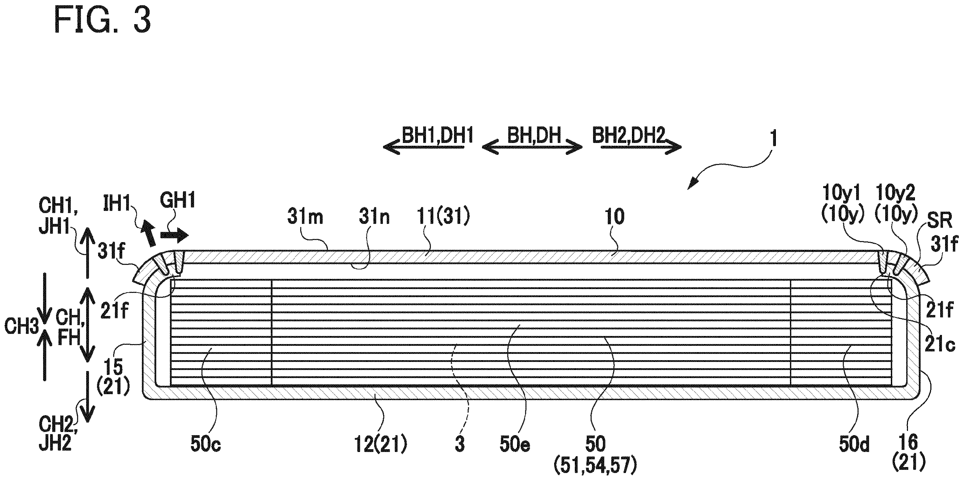

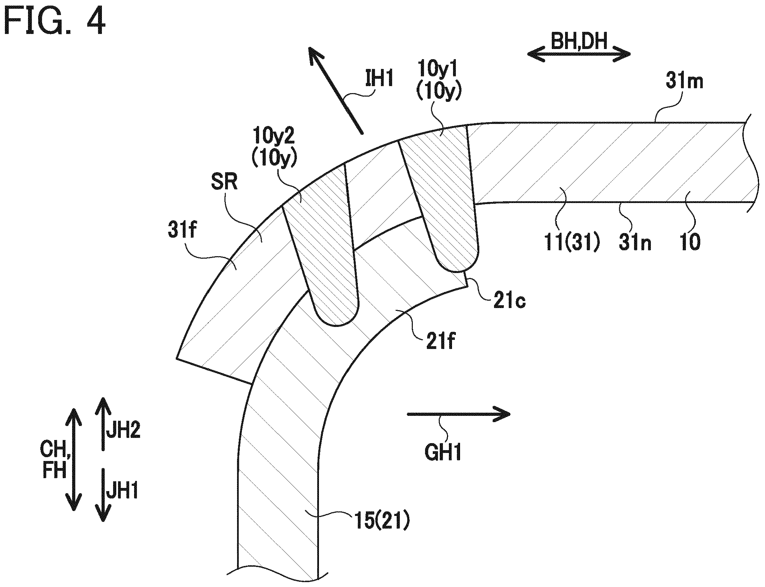

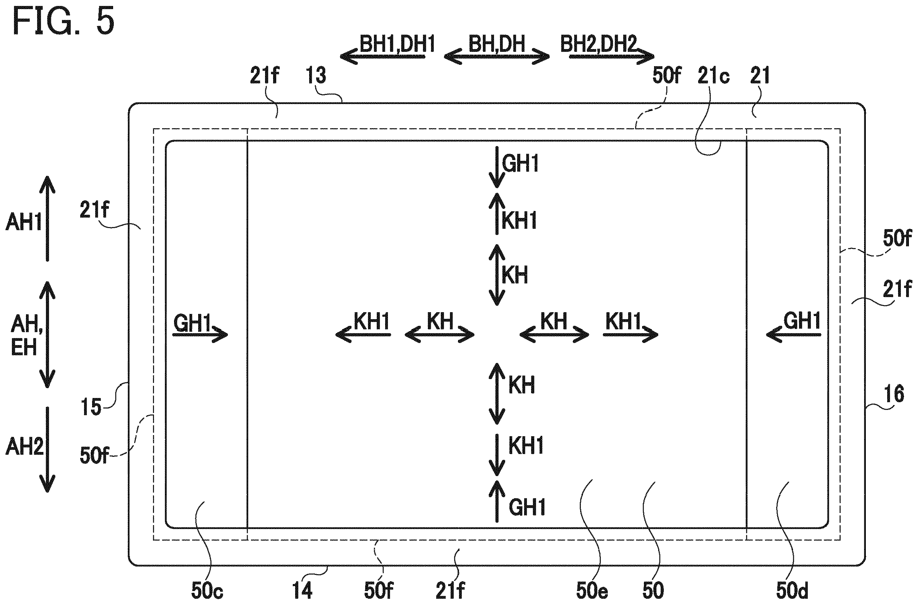

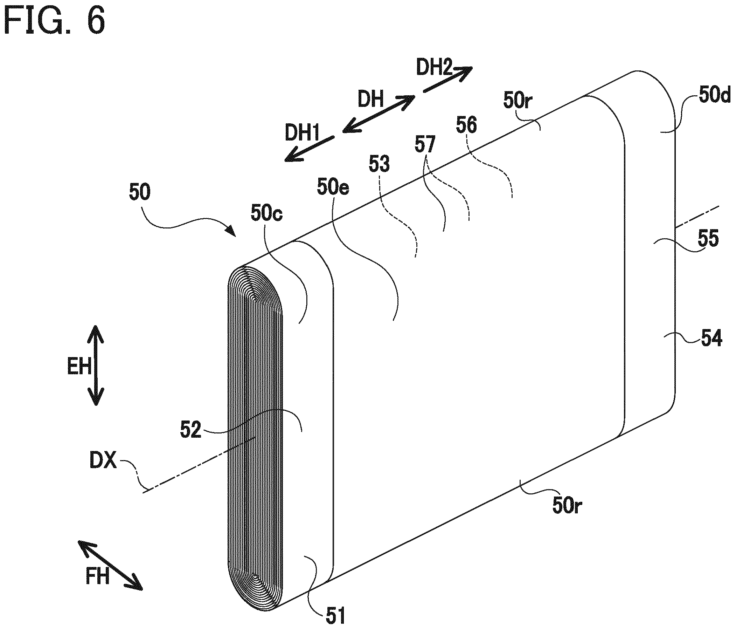

A detailed description of an embodiment of this invention will now be given referring to the accompanying drawings. FIG. 1 is a perspective view of a battery (one example of a power storage device of the invention) 1 in the embodiment. FIG. 2 is an exploded perspective view of the battery 1. FIG. 3 is a cross-sectional view of the battery 1. FIG. 4 is a partial enlarged cross-sectional view of the battery 1, at and around a ring-shaped welded portion 10y. FIG. 5 is an explanatory view showing an electrode body 50 housed in a case body 21, as viewed in a depth direction of the case body 21. FIG. 6 is a perspective view of the electrode body 50. In the following description, the case height direction AH, case width direction BH, case thickness direction CH, electrode-body axis direction DH, electrode-body width direction EH, and electrode-body thickness direction FH are defined as indicated by arrows in FIGs. 1 to 6. The battery 1 is a rectangular, i.e., rectangular parallelepiped-shaped, sealed lithium-ion secondary battery which will be installed in a vehicle, such as a hybrid vehicle, a plug-in hybrid vehicle, and an electric vehicle.

This battery 1 consists of a case 10, the flat-shaped wound electrode body 50 housed in the case 10, a positive terminal 60 and a negative terminal 70, each supported by the case 10, and other parts or components. The positive terminal 60 and the negative terminal 70 are one example of an electrode terminal of the invention. In the case 10, the electrode body 50 is covered with a bag-shaped insulating holder, not shown, formed of an insulating film. In addition, the case 10 contains an electrolyte 3, and the electrode body 50 is impregnated with a part of the electrolyte 3 while the rest of the electrolyte 3 is collected on a second side wall portion 14 corresponding to a bottom wall portion of the case 10.

The case 10 is made of metal (aluminum in this embodiment). This case 10 is shaped like a rectangular box and has a first main wall portion 11, a second main wall portion 12, and four side wall portions 13 to 16 (specifically, a first side wall portion 13, the second side wall portion 14, a third side wall portion 15, and a fourth side wall portion 16) each having a rectangular shape.

The first main wall portion 11 and the second main wall portion 12 each have a larger area than each of the first side wall portions 13 to 16. The first main wall portion 11 and the second main wall portion 12 face each other so that the first main wall portion 11 is located on one side CH1 in the case thickness direction CH (i.e., the right front side in FIGs. 1 and 2, the upper side in FIG. 3), and the second main wall portion 12 is located on the other side CH2 in the case thickness direction CH (i.e., the left rear side in FIGs. 1 and 2, the lower side in FIG. 3).

On the other hand, the side wall portions 13 to 16 each extend in the case thickness direction CH, connecting the first main wall portion 11 and the second main wall portion 12. The first side wall portion 13 and the second side wall portion 14 face each other so that the first side wall portion 13 is located on the upper side AH1 in the case height direction AH, and the second side wall portion 14 is located on the lower side AH2 in the case height direction AH. The third side wall portion 15 and the fourth side wall portion 16 face each other so that the third side wall portion 15 is located on one side BH1 in the case width direction BH and the fourth side wall portion 16 is located on the other side BH2 in the case width direction BH.

The first side wall portion 13, which is also an upper wall portion of the case 10, is provided with a safety valve 17 that can break open when the internal pressure of the case 10 exceeds a valve opening pressure. The first side wall portion 13 is further provided with a liquid inlet 13k that connects the interior and the exterior of the case 10 and is hermetically sealed with a circular disc-shaped sealing member 18 made of aluminum.

In the first side wall portion 13, the positive terminal 60 is fixedly provided near the end on the one side BH1 in the case width direction BH. Specifically, the positive terminal 60 is formed of a plurality of metal members made of aluminum, which are connected by swaging or caulking, and is fixed to the first side wall portion 13 while being insulated therefrom via a resin part 65 consisting of a plurality of resin members. This positive terminal 60 is conductively connected to a positive current collecting part 50c of the electrode body 50 within the case 10, while extending out of the case 10 through the first side wall portion 13.

In the first side wall portion 13, additionally, the negative terminal 70 is fixedly provided near the end on the other side BH2 in the case width direction BH. Specifically, the negative terminal 70 is formed of a plurality of metal members made of copper, which are connected by swaging or caulking, and is fixed to the first side wall portion 13 while being insulated therefrom via a resin part 75 consisting of a plurality of resin members. This negative terminal 70 is conductively connected to a negative current collecting part 50d of the electrode body 50 within the case 10, while extending out of the case 10 through the first side wall portion 13.

This case 10 includes a case body 21 having a bottomed rectangular prismatic shape with a rectangular opening 21c, in which the electrode body 50 is housed, and a rectangular lid member 31 closing the opening 21c of the case body 21. The case body 21 provides the above-described second main wall portion 12 and four side wall portions 13 to 16. In contrast, the lid member 31 provides the above-described first main wall portion 11 and has an inner surface 31n facing to the case body 21 and an outer surface 31m, opposite the inner surface 31n, facing the outside of the case 10, i.e., facing outward.

The lid peripheral portion 31f of the lid member 31 and the opening peripheral portion 21f of the case body 21 are hermetically joined to each other over their entire circumference, or perimeter. Specifically, the opening peripheral portion 21f of the case body 21 is bent, or curved, toward the inside GH1 of the opening 21c over the entire circumference. The lid peripheral portion 31f of the lid member 31 is bent, or curved, toward the inner surface 31n over the entire circumference. The curvature radius Rf of the lid peripheral portion 31f and the curvature radius Ro of the opening peripheral portion 21f are approximately equal (Rf ≈ Ro). The lid peripheral portion 31f and the opening peripheral portion 21f are hermetically joined together while the lid peripheral portion 31f is stacked on the opening peripheral portion 21f on the outside IH1 in the thickness direction thereof, all around the ring-band shaped range SR extending over the entire circumference and in the expanding directions LH of the lid member 31 (i.e., in all plane directions along the inner surface 31m and the outer surface 31n of the lid member 31). In detail, the lid peripheral portion 31f and the opening peripheral portion 21f are welded multiply (doubly in the embodiment) by a plurality of (two in the embodiment) ring-shaped welded portions 10y (i.e., a first ring-shaped welded portion 10y1 and a second ring-shaped welded portion 10y2), each having a ring shape extending continuously over the entire circumference

Next, the electrode body 50 will be described below, referring to FIG. 6 and FIGs. 1 to 3 and 5. This electrode body 50 consists of a strip-shaped positive electrode sheet 51 and a strip-shaped negative electrode sheet 54, which are laminated with a pair of strip-shaped separators 57 made of a porous resin film and interposed one by one therebetween, and wound together around the winding axis DX into a cylindrical shape and then pressed into a flat shape. The positive electrode sheet 51 and the negative electrode sheet 54 are one example of an electrode sheet of the invention. Specifically, the electrode body 50 includes a pair of electrode rounded portions 50r each located at either end in the electrode-body width direction EH, and an electrode laminated portion 50e located between the paired electrode rounded portions 50r. Each of the electrode rounded portions 50r is a semicircular columnar part in which the positive electrode sheet 51, negative electrode sheet 54, and separators 57 are overlapped while being bent into a semi-cylindrical shape. On the other hand, the electrode laminated portion 50e is a rectangular parallelepiped part in which the positive electrode sheet 51, negative electrode sheet 54, and separators 57 are laminated in the form of a flat plate in the electrode-body thickness direction FH. Further, the electrode body 50 includes the positive current collecting part 50c described later at the end on one side DH1 in the electrode-body axis direction DH along the winding axis DX and the negative current collecting part 50d described later at the end on the other side DH2 in the electrode-body axis direction DH.

The positive electrode sheet 51 includes a positive current collecting foil 52 made of a strip-shaped aluminum foil, and positive active material layers 53 formed in a band shape on both main surfaces of this foil 52. The positive active material layers 53 contain positive active material particles capable of absorbing and releasing lithium ions. One end portion of the positive electrode sheet 51 in the width direction is formed by the positive current collecting foil 52 exposed without having the positive active material layers 53 on both surfaces of the foil 52. In the electrode body 50, this exposed portion of the positive current collecting foil 52 protrudes in a spiral shape from the electrode laminated portion 50e to one side DH1 of the electrode-body axis direction DH, forming the positive current collecting part 50c. This positive current collecting part 50c is connected to the positive terminal 60.

The negative electrode sheet 54 includes a negative current collecting foil 55 made of a strip-shaped copper foil, and negative active material layers 56 formed in a band shape on both main surfaces of this foil 55. The negative active material layers 56 contains negative active material particles capable of absorbing and releasing lithium ions. One end portion of the negative electrode sheet 54 in the width direction is formed by the negative current collecting foil 55 exposed without having the negative active material layers 56 on both surfaces of the foil 55. In the electrode body 50, this exposed portion of the negative current collecting foil 55 protrudes in a spiral shape from the electrode laminated portion 50e to the other side DH2 of the electrode-body axis direction DH, forming the negative current collecting part 50d. The negative current collecting part 50d is connected to the negative terminal 70.

The electrode body 50 is housed in the case 10 in the orientation with the electrode-body axis direction DH extending parallel to the case width direction BH, the electrode-body width direction EH extending parallel to the case height direction AH, and the electrode-body thickness direction FH extending parallel to the case thickness direction CH. This electrode body 50 has dimensions such that it cannot be inserted into the case body 21 through the opening 21c (see FIG. 5). Specifically, when the electrode body 50 housed in the case body 21 is viewed in the depth direction JH1 of the case body 21, the electrode body 50 has dimensions in the expanding directions KH, i.e., in all plane directions, such that the ring-shaped electrode-body outer edge portion 50f located on the outside KH1 in the expanding directions KH perpendicular to the depth direction JH1 overlaps the bent opening peripheral portion 21f of the case body 21 over the entire circumference thereof.

As described above, the battery 1 is configured such that the lid peripheral portion 31f and the opening peripheral portion 21f are hermetically joined together while the bent lid peripheral portion 31f of the lid member 31 is stacked on the bent opening peripheral portion 21f of the case body 21 on the outside IH1 in the thickness direction, over the ring-band shaped range SR. Thus, the lid peripheral portion 31f and the opening peripheral portion 21f are reliably joined, and accordingly the battery 1 can be provided with high reliability of sealing between the lid member 31 and the case body 21.

In the battery 1, furthermore, the lid peripheral portion 31f and the opening peripheral portion 21f are hermetically welded together by the ring-shaped welded portion 10y. This can particularly enhance the sealing reliability between the lid member 31 and the case body 21. In the embodiment, additionally, the ring-shaped welded portion 10y is formed at multiple locations, that is, as the first ring-shaped welded portion 10y1 and the second ring-shaped welded portion 10y2. This configuration can further enhance the sealing reliability between the lid member 31 and the case body 21.

In the embodiment, the electrode body 50 provided in the battery 1 has so large dimensions in the expanding directions KH that it cannot be inserted into the case body 21 through the opening 21c. Such a large electrode body 50 can increase the battery capacity of the battery 1 per area in the expanding directions KH. In the embodiment, the case 10 is shaped like a rectangular box, in which the lid member 31 forming the first main wall portion 11 is joined to the case body 21 forming the second main wall portion 12 and four side wall portions 13 to 16. Accordingly, a battery 1 of self-compression type as described later can be easily produced at low costs.

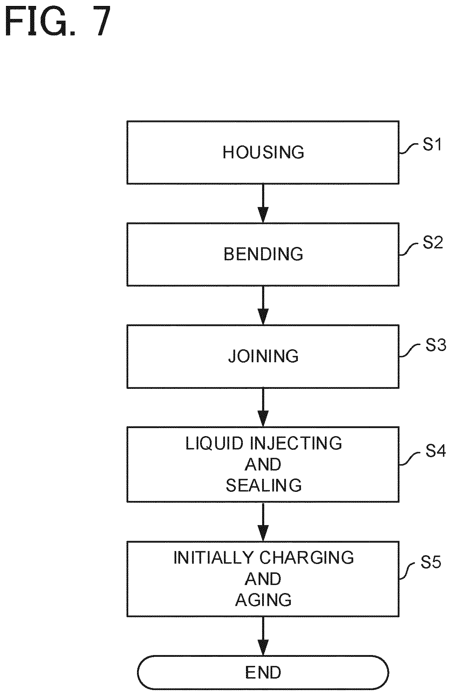

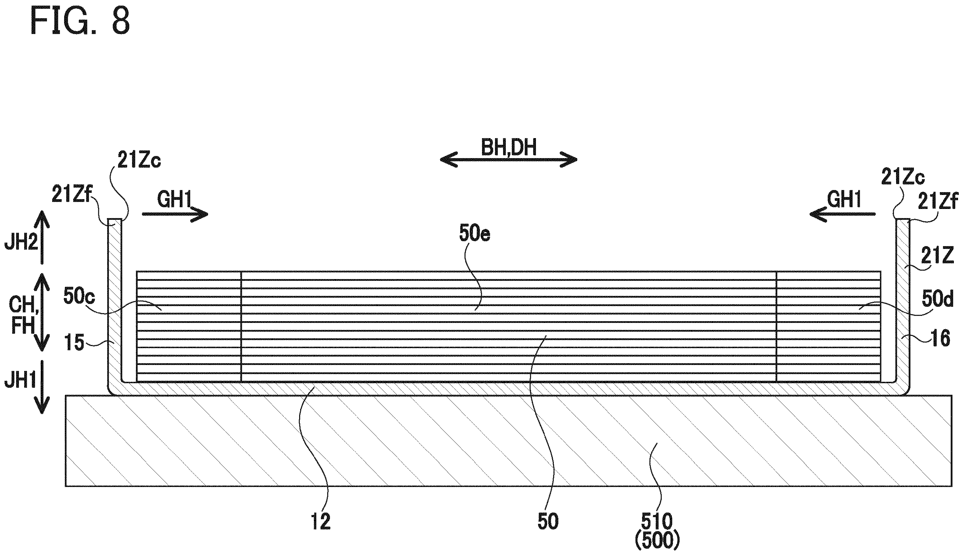

Next, a method for producing the battery 1 will be described below, referring to FIGs. 7 to 10. An unbent case body 21Z before being subjected to bending work is prepared, which includes an unbent opening peripheral portion 21Zf having not been bent yet and thus has a wide-area opening 21Zc wider in opening area than the opening 21c of the case body 21, as shown in FIG. 8. In the embodiment, the unbent opening peripheral portion 21Zf of the unbent case body 21Z extends straight in the case thickness direction CH without bending to the inside GH1 of the wide-area opening 21Zc. Other portions of the unbent case body 21Z, except for the unbent opening peripheral portion 21Zf, have the same shape as those of the case body 21. The positive terminal 60 and the negative terminal 70 are fixed to this unbent case body 21Z.

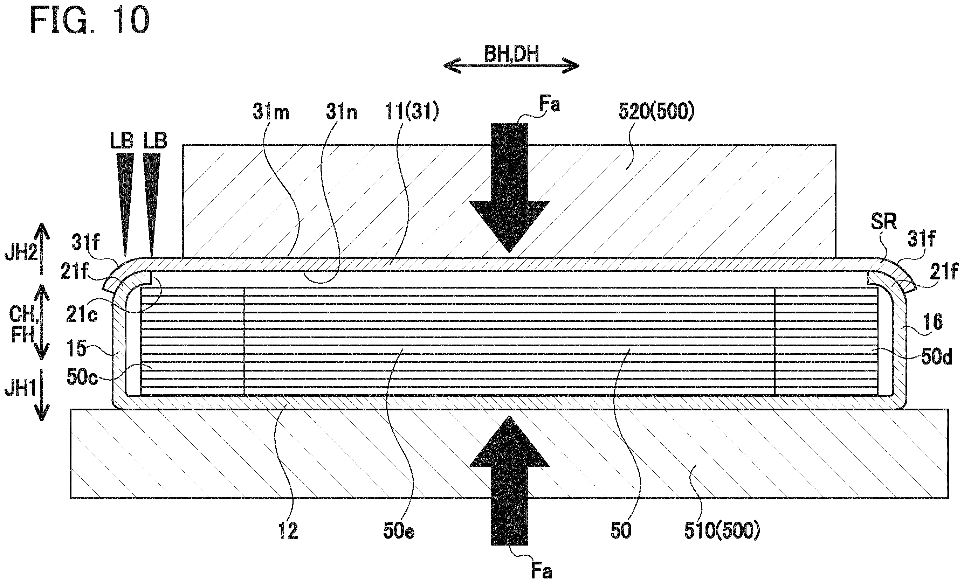

The lid member 31 is prepared separately. This lid member 31 is subjected to press work (i.e., bending work) in advance to bend the lid peripheral portion 31f toward the inner surface 31n over the entire circumference as shown in FIG. 10.

The electrode body 50 is formed and wrapped in a pouch-shaped insulating holder (not shown) in advance.

In a housing step S1 (see FIG. 7), the electrode body 50 enclosed in the insulating holder is housed into the unbent case body 21Z with the positive terminal 60 and the negative terminal 70 fixed thereto as shown in FIG. 8. Specifically, the unbent case body 21Z is put on a flat table 510 of a press machine 500 so that the second main wall portion 12 contacts with the table 510 and the wide-area opening 21Zc faces upward. Subsequently, the electrode body 50 is inserted into the unbent case body 21Z through the wide-area opening 21Zc in an orientation such that the electrode-body axis direction DH is parallel to the case width direction BH, the electrode-body width direction EH is parallel to the case height direction AH, and the electrode-body thickness direction FH is parallel to the case thickness direction CH. Since the wide-area opening 21Zc of the unbent case body 21Z is wider in opening area than the opening 21c of the case body 21, this unbent case body 21Z can accommodate the electrode body 50 that cannot be inserted into the case body 21 through the opening 21c due to its large dimensions in the expanding directions KH.

Thereafter, the positive current collecting part 50c of the electrode body 50 and the positive terminal 60 fixed to the unbent case body 21Z are connected to each other by laser welding. In addition, the negative current collecting part 50d of the electrode body 50 and the negative terminal 70 fixed to the unbent case body 21Z are connected to each other by laser welding.

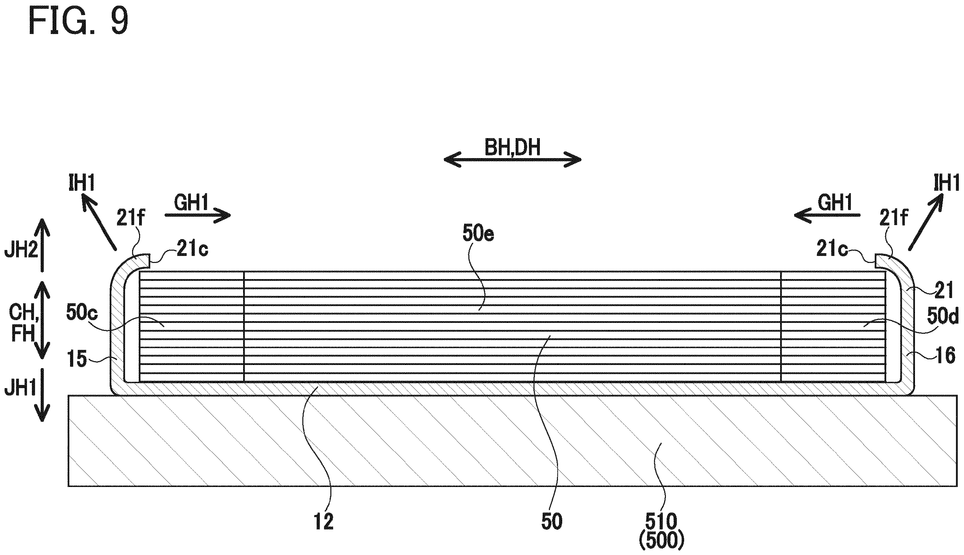

In a bending step S2 (see FIG. 7), the unbent opening peripheral portion 21Zf of the unbent case body 21Z holding therein the electrode body 50 is bent to the inside GH1 of the wide-area opening 21Zc to form the opening peripheral portion 21f as shown in FIG. 9. Specifically, the unbent case body 21Z is subjected to press work (i.e., bending work) to bend the unbent opening peripheral portion 21Zf to the inside GH1 of the wide-area opening 21Zc, thus forming the bent, or curved, opening peripheral portion 21f. In this press work, the curvature radius Ro of the curved opening peripheral portion 21f is made approximately equal to the curvature radius Rf of the curved lid peripheral portion 31f (Rf ≈ Ro). In this manner, the case body 21 with the bent opening peripheral portion 21f is formed with the opening 21c narrower in opening area than the wide-area opening 21Zc.

In a joining step S3 (see FIG. 7), the lid member 31 is overlaid on the case body 21and the electrode body 50 housed therein, as shown in FIG. 10. The bent lid peripheral portion 31f is then pressed against the bent opening peripheral portion 21f over the entire circumference. Specifically, a pressing part 520 of the press machine 500 is brought into contact with the first main wall portion 11 formed by the lid member 31, and applies the external forces Fa from above and below as indicated with thick arrows in FIG. 10 to the first main wall portion 11 and the second main wall portion 12 while holding the lid member 31 and the case body 21 between the pressing part 520 and the table 510. When the lid peripheral portion 31f is overlaid on and pressed against the opening peripheral portion 21f over the entire circumference, the lid peripheral portion 31f is stacked on the opening peripheral portion 21f over the ring-band shaped range SR.

While the lid peripheral portion 31f is pressed against the opening peripheral portion 21f by the press machine 500, the lid peripheral portion 31f and the opening peripheral portion 21f are hermetically joined together over the entire circumference, thus forming the case 10. In the embodiment, this joining is performed by applying the laser beam LB toward the lid peripheral portion 31f from the opposite-depth direction JH2 (the upper side in FIG. 10) opposite the depth direction JH1 (the lower side in FIG. 10) of the case body 21 to weld the the lid peripheral portion 31f to the opening peripheral portion 21f at the first ring-shaped welded portion 10y1 in a ring shape continuously extending over the entire circumference of the lid peripheral portion 31f and the opening peripheral portion 21f. Thereafter, the laser beam LB is further applied toward the lid peripheral portion 31f from the opposite-depth direction JH2 to weld the lid peripheral portion 31f to the opening peripheral portion 21f at the second ring-shaped welded portion 10y2 in a ring shape continuously extending over the entire circumference. This ensures that the lid peripheral portion 31f and the opening peripheral portion 21f are hermetically joined to each other. Then, the pressing part 520 of the press machine 500 is moved away from the lid member 31 to remove the external forces Fa.

In a liquid-injecting and sealing step S4 (see FIG. 7), the electrolyte 3 is injected into the case 10 through the liquid inlet 13k, so that the electrode body 50 is impregnated with the electrolyte 3. Then, the liquid inlet 13k is covered with the sealing member 18 from the outside, and the sealing member 18 is laser-welded to the case 10, thus hermetically sealing between the sealing member 18 and the case 10.

In an initially charging and aging step S5, a charging device (not shown) is connected to the battery 1 to initially charge this battery 1. Then, the initially charged battery 1 is left to stand for a predetermined time for aging. In this manner, the battery 1 is completed.

In the method for producing the battery 1 in the embodiment, as described above, the joining step S3 is performed by hermetically joining the lid peripheral portion 31f and the opening peripheral portion 21f over their entire circumference, while overlaying and pressing the lid peripheral portion 31f onto the opening peripheral portion 21f . This can make sure that the lid peripheral portion 31f and the opening peripheral portion 21f are hermetically joined to each other. This method can therefore produce the battery 1 with high reliability of sealing between the lid member 31 and the case body 21.

In the embodiment, furthermore, while the lid peripheral portion 31f is being pressed against the opening peripheral portion 21f, the laser beam LB is applied to the lid peripheral portion 31f, so that the lid peripheral portion 31f is welded to the opening peripheral portion 21f by the ring-shaped welded portion 10y. This can particularly enhance the reliability of sealing between the lid member 31 and the case body 21. Further, the laser beam LB is applied to the lid peripheral portion 31f from the opposite-depth direction JH2 (e.g., from above in the embodiment), which enables easy welding the lid peripheral portion 31f to the opening peripheral portion 21f all over the circumference. The ring-shaped welded portion 10y that welds the lid peripheral portion 31f to the opening peripheral portion 21f is formed at multiple locations, i.e., as the first ring-shaped welded portion 10y1 and the second ring-shaped welded portion 10y2 in the embodiment. This can further enhance the reliability of sealing between the lid member 31 and the case body 21.

In the embodiment, the unbent case body 21Z includes the unbent opening peripheral portion 21Zf not yet subjected to bending work and thus provides the wide-area opening 21Zc having a wide opening area, and the the electrode body 50 is first inserted into the unbent case body 21Z through such a wide-area opening 21Zc. Then, the bending step S2 is performed to form the case body 21 with the bent opening peripheral portion 21f and the opening 21c having a narrow opening area. Thus, the battery 1 can be easily produced accommodating the electrode body 50 that cannot be inserted through the narrow opening 21c due to its large dimensions in the expanding directions KH.

In the embodiment, the case 10 of the battery 1 is shaped like a rectangular box. In the housing step S1, the electrode body 50 is inserted, through the opening (i.e., the wide-area opening 21Zc), into the bottomed rectangular prismatic case body (i.e., the unbent case body 21Z) forming the second main wall portion 12 and four side wall portions 13 to 16. Therefore, the opening (i.e., the wide-area opening 21Zc) is larger as compared to the configuration that the electrode body 50 is inserted into a case body including the first main wall portion 11, second main wall portion 12, and three side wall portions, i.e., the second side wall portion 14, third side wall portion 15, and fourth side wall portion 16. Thus, the electrode body 50 can be easily housed in the case body (the unbent case body 21Z) and thus the battery 1 can be easily produced.

The foregoing embodiments are mere examples and give no limitation to the present invention. The present invention may be embodied in other specific forms without departing from the essential characteristics thereof.

For example, the embodiment exemplifies the flat wound electrode body 50 as the electrode body, but the invention is not limited thereto. The electrode body may be a stacked electrode body in which a plurality of rectangular positive electrode plates (electrode plates) and a plurality of negative electrode plates (electrode plates) are stacked alternately with rectangular separators interposed one by one therebetween.

### Reference Signs List

- 1: Battery (Power storage device)
- 10: Case
- 10y: Ring-shaped welded portion
- 10y1: First ring-shaped welded portion
- 10y2: Second ring-shaped welded portion
- 11: First main wall portion
- 12: Second main wall portion
- 13: First side wall portion (Upper wall portion)
- 14: Second side wall portion (Bottom wall portion)
- 15: Third side wall portion
- 16: Fourth side wall portion
- 21: Case body
- 21c: Opening
- 21f: Opening peripheral portion
- 21Z: Unbent case body
- 21Zc: Wide-area opening
- 21Zf: Unbent opening peripheral portion
- 31: Lid member
- 31n: Inner surface (of lid member)
- 31f: Lid peripheral portion
- 50: Electrode body
- 50e: Electrode laminated portion
- 50f: Electrode-body outer edge portion
- 51: Positive electrode sheet (Electrode sheet)
- 54: Negative electrode sheet (Electrode sheet)
- 60: Positive terminal (Electrode terminal)
- 70: Negative terminal (Electrode terminal)
- CH: Case thickness direction
- FH: Electrode-body thickness direction
- GH1: Inside (of opening of case body)
- IH1: Outside in thickness direction (of opening peripheral portion)
- JH1: Depth direction (of case body)
- JH2: Opposite-depth direction (of case body)
- KH: Expanding direction (perpendicular to depth direction)
- KH1: Outside (in expanding direction)
- LH: Expanding direction (of lid member)
- SR: Ring-band shaped range
- LB: Laser beam
- S1: Housing step
- S2: Bending step
- S3: Joining step

## Claims

1. A power storage device (1) comprising:
a case (10); and
an electrode body (50) housed in the case (10),
the case (10) including:
a case body (21) having a bottomed prismatic shape with an opening (21c), in which the electrode body (50) is housed; and
a lid member (31) having a plate shape and closing the opening (21c), the lid member (31) including:
an inner surface (31n) facing to the case body (21), and
a lid peripheral portion (31f) welded over an entire circumference to an opening peripheral portion (21f) of the case body (21),
**characterized in that**
the opening peripheral portion (21f) of the case body (21) is bent over an entire circumference to inside (GH1) of the opening (21c),
the lid peripheral portion (31f) of the lid member (31) is bent over the entire circumference toward the inner surface (31n), and
the lid peripheral portion (31f) and the opening peripheral portion (21f) are hermetically joined to each other while the lid peripheral portion (31f) is stacked on the opening peripheral portion (21f) on outside (IH1) in a thickness direction over a ring-band shaped range (SR) extending over the entire circumference and in expanding directions (LH) of the lid member (31).

2. The power storage device (1) according to claim 1, wherein the lid peripheral portion (31f) and the opening peripheral portion (21f) are hermetically welded together by a ring-shaped welded portion (10y, 10y1, 10y2) having a ring shape extending continuously over an entire circumference.

3. The power storage device (1) according to claim 2, wherein the lid peripheral portion (31f) and the opening peripheral portion (21f) are hermetically welded together by a plurality of the ring-shaped welded portions (10y1, 10y2).

4. : The power storage device (1) according to any one of claims 1 to 3, wherein the electrode body (50) housed in the case body (21) has a dimension in expanding directions (KH) such that, as viewed in a depth direction (JH1) of the case body (21), a ring-shaped electrode-body outer edge portion (50f) of the electrode body (50), located on outside (KH1) of the expanding directions (KH) perpendicular to the depth direction (JH1), overlaps the opening peripheral portion (21f) of the case body (21) over the entire circumference.

5. A method for producing a power storage device (1), the power storage device (1) comprising:
the power storage device comprises:
a case (10); and
an electrode body (50) housed in the case (10),
the case (10) including:
a case body (21) having a bottomed prismatic shape with an opening (21c), in which the electrode body (50) is housed; and
a lid member (31) having a plate shape and closing the opening (21c), the lid member (31) including:
an inner surface (31n) facing to the case body (21), and
a lid peripheral portion (31f) welded over an entire circumference to an opening peripheral portion (21f) of the case body (21),
the opening peripheral portion (21f) of the case body (21) is bent over an entire circumference to inside (GH1) of the opening (21c),
the lid peripheral portion (31f) of the lid member (31) is bent over the entire circumference toward the inner surface (31n),
the lid peripheral portion (31f) and the opening peripheral portion (21f) are hermetically joined together while the lid peripheral portion (31f) overlaps the opening peripheral portion (21f) on the outside (IH1) in a thickness direction thereof over the entire circumference,
the lid peripheral portion (31f) and the opening peripheral portion (21f) are hermetically joined to each other while the lid peripheral portion (31f) is stacked on the opening peripheral portion (21f) on outside (IH1) in a thickness direction over a ring-band shaped range (SR) extending over the entire circumference and in expanding directions (LH) of the lid member (31),
wherein (EP: characterized in that) the method comprises:
housing (S1) the electrode body (50) into the case body (21); and
joining (S3) the lid peripheral portion (31f) and the opening peripheral portion (21f) hermetically to each other over an entire circumference to form the case (10) while the lid member (31) is overlaid on the case body (21) and the electrode body (50) housed in the case body (21), and the bent lid peripheral portion (31f) is overlaid on and pressed against the bent opening peripheral portion (21f) over the entire circumference.

6. The method for producing a power storage device (1) according to claim 5,
wherein the lid peripheral portion (31f) and the opening peripheral portion (21f) are hermetically welded together by a ring-shaped welded portion (10y, 10y1, 10y2) formed in a ring shape extending continuously over an entire circumference,
joining (S3) the lid peripheral portion (31f) and the opening peripheral portion (21f) includes welding the lid peripheral portion (31f) to the opening peripheral portion (21f) by the ring-shaped welded portion (10y, 10y1, 10y2) by irradiating the lid peripheral portion (31f) with a laser beam (LB) from an opposite-depth direction (JH2) opposite a depth direction (JH1) of the case body (21).

7. The method for producing a power storage device (1) according to claim 6,
wherein the lid peripheral portion (31f) and the opening peripheral portion (21f) are hermetically welded together by a plurality of the ring-shaped welded portions (10y1, 10y2), and
joining (S3) the lid peripheral portion (31f) and the opening peripheral portion (21f) includes forming the plurality of ring-shaped welded portions (10y1, 10y2).

8. The method for producing a power storage device (1) according to any one of claims battery 5 to 7,
wherein the electrode body (50) housed in the case body (21) has a dimension in expanding directions (KH) such that, as viewed in a depth direction (JH1) of the case body (21), a ring-shaped electrode-body outer edge portion (50f) of the electrode body (50), located on outside (KH1) in the expanding directions (KH) perpendicular to the depth direction (JH1), overlaps the opening peripheral portion (21f) of the case body (21) over the entire circumference, and
housing the electrode body (50) into the case body (21) is performed by inserting the electrode body (50) into an unbent case body (21Z) that has an unbent opening peripheral portion (21Zf) defining a wide-area opening (21Zc) having a wider open area than the opening (21c) of the case body (21), through the wide-area opening (21Zc), and
after housing (S1) the electrode body (50) into the case body (21) but before joining (S3) the lid peripheral portion (31f) and the opening peripheral portion (21f), the method further comprises bending the unbent opening peripheral portion (21Zf) of the unbent case body (21Z) housed in the electrode body (50) toward inside (GH1) of the wide-area opening (21Zc) to form the opening peripheral portion (21f).
